# EUROPÄISCHE PATENTSCHRIFT

(11) **EP 4 244 784 B1**
(45) Veröffentlichungstag und Bekanntmachung des Hinweises auf die Patenterteilung: **22.10.2025**
(21) Anmeldenummer: 21810550.0
(22) Anmeldetag: 09.11.2021
(51) Int. Cl.: G06Q 10/30, G06Q 10/0833

(54) **NACHVERFOLGBARER TRANSPORT VON RESTMATERIAL**
TRACEABLE TRANSPORT OF RESIDUAL MATERIAL
TRANSPORT TRAÇABLE DE MATÉRIAU RÉSIDUEL

(30) Priorität: 10.11.2020 DE 102020214133
(43) Veröffentlichungstag der Anmeldung: 20.09.2023
(73) Patentinhaber: TRUMPF Werkzeugmaschinen SE + Co. KG, 71254 Ditzingen (DE)
(72) Erfinder: MECK, Tobias, 7206 Igis (CH)
(74) Vertreter: Trumpf Patentabteilung
(86) Internationale Anmeldenummer: PCT/EP2021/081090
(87) Internationale Veröffentlichungsnummer: WO 2022/101189

(56) Entgegenhaltungen:
- DE-A1- 10 030 905
- US-A1- 2003 014 334
- US-A1- 2015 324 760
- US-A1- 2015 339 864

## Beschreibung

### Hintergrund der Erfindung

Die Erfindung betrifft ein Verfahren und ein System zum Recycling von Restmaterial.

Es ist bekannt, in einer Fertigung anfallendes Restmaterial zu recyceln. Insbesondere in der Blechbearbeitung werden Restgitter, die beim Trennen von Blechteilen aus Blechtafeln anfallen, im Stahlwerk erneut eingeschmolzen.

Der Transport des Restmaterials kann über eine Datenbank nachverfolgt werden. Dies ist beispielsweise aus der US 2009/0201369 A1 und der WO 2018/099549 A1 bekannt geworden. Problematisch ist jedoch, dass das anfallende Restmaterial nicht sortenrein verarbeitet, sondern, beispielsweise mit Haushaltsschrott, vermischt wird. Hierdurch wird der beim Verwerter des Restmaterials eingesetzte Energieaufwand unnötig erhöht.

Aus der US 2015/0324760 A1 ist ein Nachverfolgungssystem für Müll bekannt.

### Aufgabe der Erfindung

Es ist daher Aufgabe der Erfindung, ein Verfahren und ein System bereit zu stellen, das ein energieeffizientes Recycling von Restmaterial ermöglicht.

### Beschreibung der Erfindung

Diese Aufgabe wird erfindungsgemäß gelöst durch ein Verfahren nach Anspruch 1 und ein System nach Anspruch 10. Die abhängigen Ansprüche geben bevorzugte Ausführungsformen wieder.

Die erfindungsgemäße Aufgabe wird somit gelöst durch ein Verfahren zum Recycling von Restmaterial mit zumindest folgenden Verfahrensschritten:
C) Füllen von, insbesondere sortenreinem, Restmaterial in einen Behälter, wobei der Behälter einen Tracker eines Track&Trace-Systems aufweist;
D) Speichern von Informationen zur Materialart des Restmaterials im Tracker;
   wobei die Verfahrensschritte C) und D) in beliebiger Reihenfolge oder gleichzeitig durchgeführt werden können;
E) Transport des Behälters zu einem Verwerter des Restmaterials.

Das erfindungsgemäße Verfahren erlaubt somit das Tracking von, insbesondere sortenreinem, vorzugsweise überwiegend sortenreinem, Restmaterial bis zum Verwerter des Restmaterials. Dieser kann dann das Restmaterial mit geringem Energieaufwand aufbereiten und wieder zur Verfügung stellen. Eine Vermischung, beispielsweise von sortenreinem Schrott mit Haushaltsschrott, kann weitestgehend vermieden werden. Hierdurch wird Energie gespart, die Umwelt geschont und der Lieferant des, vorzugsweise weitestgehend sortenreinen, Materials kann einen höheren Preis für das abgelieferte Restmaterial erwarten.

Dabei ist zu beachten, dass unter "Recycling" nicht notwendigerweise der vollständige Materialkreislauf zu verstehen ist, sondern auch ein Teil des Materialkreislaufs.

Weiterhin ist im Verfahrensschritt D) zu beachten, dass auch weitere Informationen, zusätzlich zur Materialart, im Tracker gespeichert werden können.

Unter einem Verwerter kann insbesondere ein Schrotthändler und/oder ein Stahlwerk verstanden werden.

Unter einem Tracker eines Track&Trace-Systems wird dabei ein Tag verstanden, der von einem Positionierungssystem, insbesondere einem GPS und/oder einem Indoor-Positionierungssystem, erfassbar ist. Der Tracker kann durch einen oder mehrere Scanner lokalisiert werden, an denen der Tracker eingeloggt werden kann. Vorzugsweise kann der Tracker durch Anker geortet werden, indem eine Flugzeitmessung von Signalen zwischen dem Tracker und den Ankern durchgeführt und anschließend mittels Triangulation die Position des Trackers bestimmt wird. Das Track&Trace-System ist dazu ausgebildet, die Position des Trackers und somit implizit die Position des Restmaterials im Behälter nachzuvollziehen.

Erfindungsgemäß wird vor dem Verfahrensschritt C) folgender Verfahrensschritt durchgeführt:
B) Zerkleinern des Restmaterials mit einem Zerkleinerer und Speichern der Informationen zur Materialart des Restmaterials auf dem Tracker im Verfahrensschritt D) durch den Zerkleinerer.

Durch den Zerkleinerer kann das Restmaterial platzsparend im Behälter gelagert werden. Da für sortenreineres Restmaterial typischerweise höherer Preise vom Verwerter bezahlt werden, amortisieren sich die Kosten für einen Zerkleinerer schnell.

Besonders effektiv lässt sich die Erfindung bei der Blechbearbeitung umsetzen. In diesem Fall kann das Restmaterial in Form eines Restgitters aus einer Blechtafel vorliegen. Das Zerkleinern des Restgitters kann in diesem Fall durch einen Zerkleinerer in Form einer Restgitterschere erfolgen.

Vor dem Verfahrensschritt B) kann folgender Verfahrensschritt durchgeführt werden:
A) Heraustrennen von Blechteilen aus einer Blechtafel unter Erzeugung des Restgitters mit einer Werkzeugmaschine.

Die Werkzeugmaschine ist vorzugsweise in Form einer Trennmaschine zum Austrennen von Blechteilen aus einer Blechtafel ausgebildet. Insbesondere kann die Werkzeugmaschine in Form einer Laserschneidmaschine und/oder einer Stanzmaschine ausgebildet sein.

Die Informationen zum Restmaterial können drahtlos und/oder drahtgebunden von der Werkzeugmaschine zum Zerkleinerer übertragen werden.

Die Übertragung der Informationen zur Materialart von der Werkzeugmaschine zur Restgitterschere kann über eine Datenverbindung erfolgen, bei der die Werkzeugmaschine und die Restgitterschere jeweils über einen Netzwerkanschluss an das Internet und/oder ein Intranet angebunden sind.

Alternativ oder zusätzlich dazu können die Informationen zum Restmaterial an der Werkzeugmaschine in Form eines Codes auf dem Restgitter aufgebracht und von einer Kamera der Restgitterschere ausgelesen werden. Der Code kann in Form eines Dot-Matrix-Codes vorliegen.

Besonders bevorzugt können die Informationen zum Restmaterial in der Materialtabelle der Werkzeugmaschine hinterlegt sein. Hierdurch sind die Informationen ohne Mehraufwand verfügbar.

Das Restmaterial ist beim Verwerter besonders leicht verarbeitbar, wenn der Tracker Informationen zur Werkstoffnummer, dem Erzeuger und/oder dem Gewicht des Restmaterials beinhaltet.

Im Verfahrensschritt D) kann auf dem Tracker der Vermerk "abholbereit" gespeichert werden, wenn vorerst kein weiteres Restmaterial dieser Sorte anfällt und/oder der Behälter voll ist.

Der Füllzustand des Behälters kann über eine Waage ermittelt werden.

Der Tracker kann eine Warnung ausgeben oder initiieren, wenn eine Vermischung verschiedener Restmaterialien, insbesondere beim Umfüllen vom Behälter des Zerkleinerers in einen Sammelbehälter, erfolgt oder erfolgen soll.

Die auf dem Tracker gespeicherten Informationen können zumindest teilweise, insbesondere vollständig, auf einen Cloud-basierten Server geladen werden. Alternativ oder zusätzlich dazu können Positionsinformationen des Trackers auf den Cloud-basierten Server geladen werden, um die Position des Trackers leicht nachverfolgen zu können.

In besonders bevorzugter Ausgestaltung der Erfindung werden die auf dem Tracker gespeicherten Informationen zumindest teilweise, insbesondere vollständig, in einem Online-Marktplatz angezeigt. Hierdurch kann das, insbesondere sortenreine, Restmaterial gleichzeitig verschiedenen Verwertern angeboten werden.

Die erfindungsgemäße Aufgabe wird weiterhin gelöst durch ein System mit zumindest folgenden Merkmalen:
a) Ein Behälter und ein Track&Trace-System, wobei ein Tracker des Track&Trace-Systems am Behälter angeordnet oder ausgebildet ist, wobei auf dem Tracker zumindest Informationen zur Materialart von im Behälter gelagertem Restmaterial speicherbar ist;
b) einen Zerkleinerer, insbesondere in Form einer Restgitterschere, zum Befüllen des Behälters mit, insbesondere sortenreinem, Restmaterial.

Vorzugsweise weist das System eine Werkzeugmaschine zur Versorgung des Zerkleinerers, insbesondere in Form der Restgitterschere, auf.

Erfindungsgemäß ist der Zerkleinerer dazu ausgebildet, Informationen zum Restmaterial auf dem Tracker zu speichern.

Die Werkzeugmaschine kann drahtlos und/oder drahtgebunden mit dem Zerkleinerer verbunden sein, um die Informationen über das Restmaterial von der Werkzeugmaschine auf den Zerkleinerer zu übermitteln.

Alternativ oder zusätzlich dazu kann der Zerkleinerer eine Kamera aufweisen, um einen Code auf dem Restmaterial, insbesondere auf dem Restgitter, zu scannen und daraus die Informationen über das Restmaterial auszulesen.

Der Code kann in Form eines Dot-Matrix-Codes vorliegen.

Die Werkzeugmaschine und der Zerkleinerer können jeweils einen Netzwerkanschluss aufweisen, um die Informationen über das Restmaterial von der Werkzeugmaschine auf den Zerkleinerer zu übermitteln.

Das System kann eine Waage aufweisen, um den Füllzustand des Behälters zu ermitteln, wobei der Füllzustand auf dem Tracker speicherbar ist.

Das System kann einen Cloud-basierten Server aufweisen, auf den die Informationen über das Restmaterial übertragbar sind. Der Cloud-basierte Server kann hierzu drahtlos und/oder drahtgebunden mit dem Zerkleinerer, der Werkzeugmaschine und/oder dem Tracker verbunden sein.

Das System kann weiterhin einen Online-Marktplatz aufweisen, in dem die Informationen über das Restmaterial anzeigbar sind.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

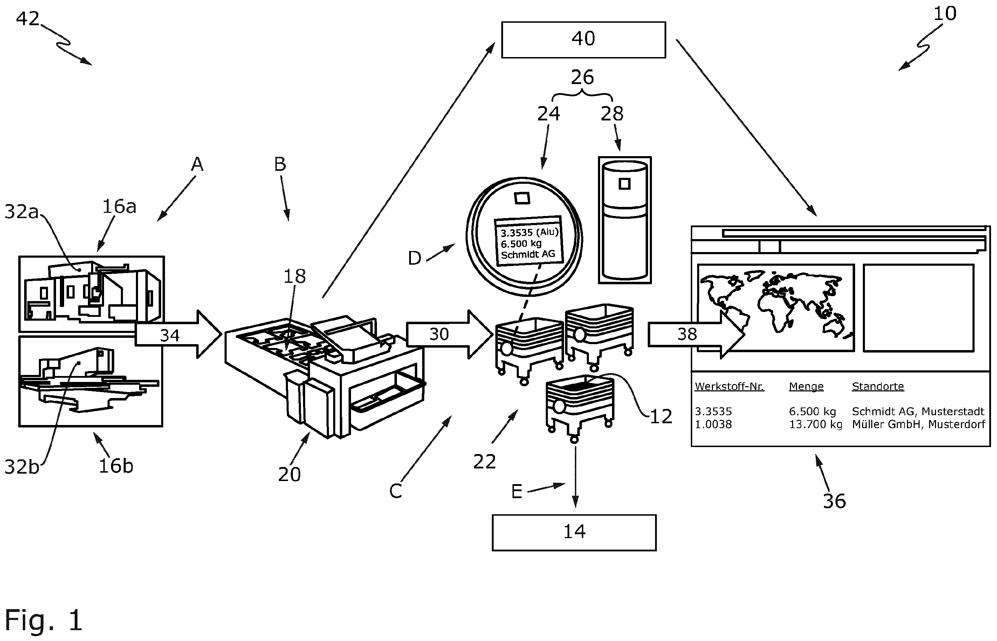

- Fig. 1: zeigt schematisch das erfindungsgemäße System und das erfindungsgemäße Verfahren.

Fig. 1 zeigt ein System 10 zum Recycling von Restmaterial 12. Das Restmaterial 12 fällt typischerweise als Abfall in einem Fertigungsprozess an. Das Restmaterial 12 kann als Blechabfall vorliegen. Das Restmaterial 12 wird zu einem Verwerter 14 transportiert. Im Fall von Blechabfall handelt es sich bei dem Verwerter 14 typischerweise um ein Stahlwerk, in dem das Restmaterial 12 eingeschmolzen wird.

Da das Restmaterial 12 oftmals nicht sortenrein und/oder ohne nähere Materialinformationen beim Verwerter 14 angeliefert wird, muss zur Aufbereitung des Restmaterials 12 viel Energie aufgewendet werden. Die vorliegende Erfindung ermöglicht demgegenüber die Aufbereitung des Restmaterials 12 mit deutlich niedrigerem Energieaufwand.

Nachfolgend wird die Erfindung für den Fall beschrieben, dass das Restmaterial 12 in Form von Blechabfall aus einer Blechteilefertigung vorliegt.

Zur Fertigung von Blechteilen ist zumindest eine Werkzeugmaschine 16a, 16b vorgesehen. Die Werkzeugmaschine 16a, b kann in Form einer Trennmaschine ausgebildet sein. Vorliegend handelt es sich bei der Werkzeugmaschine 16a um eine Laserschneidmaschine und bei der Werkzeugmaschine 16b um eine Stanzmaschine.

Bei der Fertigung der Blechteile aus einer Blechtafel fallen Restgitter 18 an. Die Restgitter 18 können in einem Zerkleinerer 20, hier in Form einer Restgitterschere 20, zerkleinert werden. Das zerkleinerte Restmaterial 12 wird in einen Behälter 22 verfüllt, um zum Verwerter 14 transportiert zu werden.

Erfindungsgemäß ist es nunmehr vorgesehen, den Behälter 22 mit, insbesondere sortenreinem Restmaterial 12, d.h. mit einer einzigen Materialart, zu befüllen und die Informationen zu diesem Restmaterial mit dem Behälter 22 zu verknüpfen.

Hierzu wird ein Tracker 24 eingesetzt, der am Behälter 22 angeordnet oder ausgebildet ist. Der Tracker 24 kann dabei Informationen zur Materialart, der Menge bzw. dem Gewicht des Restmaterials 12 und/oder dem Erzeuger des Restmaterials 12 aufweisen.

Der Tracker 24 ist Teil eines Track&Trace-Systems 26. Das Track&Trace-System 26 kann dabei zumindest einen Scanner 28 aufweisen und/oder Teil eines Indoor-Lokalisierungssystems sein. Das Indoor-Lokalisierungssystem kann dabei mehrere Anker aufweisen, um die Position des Tracker 24 zu bestimmen. Der Tracker 24 kann auch als Tag des Indoor-Lokalisierungssystems bezeichnet werden.

Der Tracker 24 kann die Informationen zum Restmaterial 12 drahtlos und/oder drahtgebunden vom Zerkleinerer 20 erhalten. Dies ist in Fig. 1 durch einen Datenpfeil 30 schematisch dargestellt. Der Zerkleinerer 20 kann die Informationen zum Restmaterial 12 wiederum drahtlos und/oder drahtgebunden von einer Werkzeugmaschine 16a, b erhalten. Insbesondere können die Informationen zum Restmaterial 12 in einer Materialtabelle 32a, 32b einer Werkzeugmaschine 16a, 16b hinterlegt sein. Die Übertragung der Informationen zum Zerkleinerer 20 ist in Fig. 1 durch einen Datenpfeil 34 schematisch dargestellt.

Der Behälter 22 kann zu einem vorbestimmten Verwerter 14 versandt werden. Alternativ dazu kann das System 10 einen Online-Marktplatz 36 umfassen, in dem das Restmaterial 12 angeboten und/oder gehandelt wird. Die Übertragung der Informationen zum Restmaterial 12 in den Online-Marktplatz 36 ist in Fig. 1 durch einen Datenpfeil 38 schematisch dargestellt.

Der Online-Marktplatz 36 kann die Informationen zum Restmaterial 12 von einem Cloud-basierten Server 40 erhalten. Der Cloud-basierte Server 40 kann diese Informationen von einer Werkzeugmaschine 16a, b, dem Zerkleinerer 20 und/oder dem Tracker 24 erhalten.

Das System 10 ermöglicht somit die Anlieferung, insbesondere sortenreinen, Restmaterials 12 beim Verwerter 14 mit den zugehörigen Materialinformationen. Dies ist in Fig. 1 auch in Form eines Verfahrens 42 (hier bei der Blechbearbeitung) mit folgenden Verfahrensschritten ersichtlich:
A) Heraustrennen von Blechteilen und Erzeugen von Restmaterial 12 in Form eines Restgitters 18;
B) Zerkleinern des Restgitters 18 im Zerkleinerer 20;
C) Füllen des Restmaterials 12 in den Behälter 22, wobei der Behälter 22 mit einem Tracker 24 versehen ist;
D) Speichern von Informationen zum Restmaterial 12 im Tracker 24;
E) Transport des Restmaterials 12 zum Verwerter 14.

Vor dem Verfahrensschritt E) kann das Restmaterial im Online-Marktplatz 36 gehandelt werden.

Unter Betrachtung der Zeichnung betrifft die Erfindung somit zusammenfassend ein System 10 und ein Verfahren 42 zur, insbesondere sortenreinen und gekennzeichneten Anlieferung von Restmaterial 12 zu einem Verwerter 14. Informationen zum Restmaterial 12, insbesondere zur Materialart des Restmaterials 12, werden dabei auf einem Tracker 24 am Behälter 22 des Restmaterials 12 gespeichert. Die Informationen kann der Tracker 24 von einem Zerkleinerer 20 erhalten, der die Informationen wiederum von einer Werkzeugmaschine 16a, b, insbesondere aus einer Materialtabelle 32a, b der Werkzeugmaschine 16a, b, erhalten kann. Die Informationen können weiterhin verwendet werden, um das Restmaterial 12 in einem Online-Marktplatz 36 anzubieten.

### Bezugszeichenliste

- 10: System
- 12: Restmaterial
- 14: Verwerter
- 16a, b: Werkzeugmaschine
- 18: Restgitter
- 20: Zerkleinerer
- 22: Behälter
- 24: Tracker
- 26: Track&Trace-System
- 28: Scanner
- 30: Datenpfeil
- 32a, b: Materialtabelle
- 34: Datenpfeil
- 36: Online-Marktplatz
- 38: Datenpfeil
- 40: Cloud-basierter Server
- 42: Verfahren

## Patentansprüche

1. Verfahren (42) zum Recycling von Restmaterial (12) mit den Verfahrensschritten:
C) Füllen von, insbesondere sortenreinem, Restmaterial (12) in einen Behälter (22) mit einem Tracker (24) eines Track&Trace-Systems (26);
D) Speichern von Informationen zur Materialart des Restmaterials (12) im Tracker (24);
wobei die Verfahrensschritte C) und D) in beliebiger Reihenfolge oder gleichzeitig durchgeführt werden können;
E) Transport des Behälters (22) zu einem Verwerter (14) des Restmaterials (12);
wobei vor dem Verfahrensschritt C) folgender Verfahrensschritt durchgeführt wird:
B) Zerkleinern des Restmaterials (12) mit einem Zerkleinerer (20) und Speichern der Informationen zur Materialart des Restmaterials (12) auf dem Tracker (24) im Verfahrensschritt D) durch den Zerkleinerer (20).

2. Verfahren nach Anspruch 1, bei dem das Restmaterial (12) in Form eines Restgitters (18) aus einem Blechbearbeitungsvorgang vorliegt.

3. Verfahren nach Anspruch 2, bei dem das Zerkleinern des Restmaterials (12) in Form des Restgitters (18) durch einen Zerkleinerer (20) in Form einer Restgitterschere vorgenommen wird.

4. Verfahren nach einem der Ansprüche 1 bis 3, bei dem vor dem Verfahrensschritt B) folgender Verfahrensschritt durchgeführt wird:
A) Heraustrennen von Blechteilen aus einer Blechtafel unter Erzeugung des Restgitters (18) mit einer Werkzeugmaschine (16a, b).

5. Verfahren nach Anspruch 4 in Verbindung mit Anspruch 3, bei dem die Informationen zur Materialart von der Werkzeugmaschine (16a, b) zur Restgitterschere übertragen werden; und/oder
die Informationen zur Materialart an der Werkzeugmaschine (16a, b) in Form eines Codes auf dem Restgitter (18) aufgebracht und von einer Kamera der Restgitterschere ausgelesen werden.

6. Verfahren nach einem der vorhergehenden Ansprüche, bei dem der Tracker (24) Informationen zur Werkstoffnummer, dem Erzeuger und/oder zum Gewicht des Restmaterials (12) aufweist.

7. Verfahren nach einem der vorhergehenden Ansprüche, wobei die auf dem Tracker (24) gespeicherten Informationen zumindest teilweise auf einen Cloud-basierten Server (40) geladen werden.

8. Verfahren nach Anspruch 7, bei dem die auf dem Tracker (24) gespeicherten Informationen zumindest teilweise in einem Online-Marktplatz (36) dargestellt werden.

9. System (10) zum Recycling von Restmaterial (12), bei dem das System (10) folgende Merkmale aufweist:
a) Einen Behälter (22) und ein Track&Trace-System (26), wobei ein Tracker (24) des Track&Trace-Systems (26) am Behälter (22) angeordnet oder ausgebildet ist, wobei auf dem Tracker (24) Informationen zur Materialart von im Behälter (22) gelagertem Restmaterial (12) speicherbar ist;
b) einen Zerkleinerer (20) zum Befüllen des Behälters (22) mit, insbesondere sortenreinem, Restmaterial (12), wobei der Zerkleinerer (20) dazu ausgebildet ist, die Informationen zur Materialart auf dem Tracker (24) zu speichern.

10. System nach Anspruch 9, bei dem das System (10) eine Werkzeugmaschine (16a, b) zum Beschicken des Zerkleinerers (20) aufweist.

11. System nach einem der Ansprüche 9 bis 10, bei dem die Werkzeugmaschine (16a, b) drahtlos und/oder drahtgebunden mit dem Zerkleinerer (20) verbunden ist, um die Informationen zur Materialart von der Werkzeugmaschine (16a, b) auf den Zerkleinerer (20) zu übertragen; und/oder der Zerkleinerer (20) eine Kamera aufweist, um einen Code auf dem Restgitter (18) zu scannen und daraus die Informationen zur Materialart auszulesen.

12. System nach einem der Ansprüche 9 bis 11, bei dem das System (10) einen Cloud-basierten Server (40) aufweist, auf den die Informationen zur Materialart vom Tracker (24) übertragbar sind.

13. System nach Anspruch 12, bei dem das System (10) einen Online-Marktplatz (36) aufweist, in dem die Informationen zur Materialart darstellbar sind.

## Claims

1. A method (42) for recycling residual material (12), comprising the method steps:
C) filling residual material (12), in particular unmixed, into a container (22) that has a tracker (24) of a Track&Trace system (26);
D) saving information in the tracker (24) about the material type of the residual material (12);
wherein the method steps C) and D) can be carried out in any sequence or simultaneously;
E) transporting the container (22) to a recycler (14) of the residual material (12);
wherein prior to method step C), the following method step is carried out:
B) shredding the residual material (12) using a shredder (20) and saving the information about the material type of the residual material (12) on the tracker (24) in method step D) by the shredder (20).

2. The method according to claim 1, in which the residual material (12) exists in the form of a residual grid (18) from a sheet metal processing operation.

3. The method according to claim 2, in which the shredding of the residual material (12) in the form of a residual grid (18) is performed by a shredder (20) in the form of residual grid shears.

4. The method according to one of claims 1 to 3, in which the following method step is carried out prior to method step B):
A) cutting out sheet metal parts from a sheet metal panel, thereby generating the residual grid (18), using a machine tool (16a, b).

5. The method according to claim 4 in conjunction with claim 3, in which the information about the material type is transmitted from the machine tool (16a, b) to the residual grid shears; and/or
the information at the machine tool (16a, b) about the material type is applied to the residual grid (18) in the form of a code and is read out by a camera of the residual grid shears.

6. The method according to one of the preceding claims, in which the tracker (24) has information about the material number, the producer and/or the weight of the residual material (12).

7. The method according to one of the preceding claims, wherein the information saved on the tracker (24) is loaded, at least partially, onto a cloud-based server (40).

8. The method according to claim 7, in which the information saved on the tracker (24) is at least partially represented in an online marketplace (36).

9. A system (10) for recycling residual material (12), in which the system (10) has the following features:
a) a container (22) and a Track&Trace system (26), wherein a tracker (24) of the Track&Trace system (26) is arranged or designed on the container (22), wherein information about the material type of the residual material (12) stored in the container (22) can be saved on the tracker (24);
b) a shredder (20) for filling the container (22) with residual material (12), in particular unmixed, wherein the shredder (20) is designed to save the information about the material type on the tracker (24).

10. The system according to claim 9, in which the system (10) has a machine tool (16a, b) for loading the shredder (20).

11. The system according to one of claims 9 to 10 in which the machine tool (16a, b) is connected to the shredder (20) wirelessly or in wired fashion in order to transmit the information about the material type from the machine tool (16a, b) to the shredder (20); and/or the shredder (20) has a camera in order to scan a code on the residual grid (18) and to read out the information about the material type therefrom.

12. The system according to one of claims 9 to 11, in which the system (10) has a cloud-based server (40) to which the information about the material type can be transmitted from the tracker (24).

13. The system according to claim 12, in which the system (10) has an online marketplace (36) in which the information about the material type can be displayed.

## Revendications

1. Procédé (42) de recyclage de matériau résiduel (12) comportant les étapes de procédé :
C) remplissage de matériau résiduel (12), en particulier trié par type, dans un conteneur (22) avec un traceur (24) d'un système de traçabilité (26) ;
D) enregistrement d'informations sur le type de matériau du matériau résiduel (12) dans le traceur (24) ;
dans lequel les étapes de procédé C) et D) peuvent être effectuées dans un ordre quelconque ou simultanément ;
E) transport du conteneur (22) vers un recycleur (14) du matériau résiduel (12) ;
dans lequel, avant l'étape de procédé C), est exécutée l'étape de procédé suivante :
B) broyage du matériau résiduel (12) avec un broyeur (20) et enregistrement des informations sur le type de matériau du matériau résiduel (12) sur le traceur (24) dans l'étape de procédé D) par le broyeur (20).

2. Procédé selon la revendication 1, dans lequel le matériau résiduel (12) se présente sous la forme d'un treillis résiduel (18) provenant d'une opération d'usinage de tôles.

3. Procédé selon la revendication 2, dans lequel le broyage du matériau résiduel (12) sous la forme du treillis résiduel (18) est réalisé par un broyeur (20) sous la forme d'une cisaille à treillis résiduel.

4. Procédé selon l'une des revendications 1 à 3, dans lequel, avant l'étape de procédé B), est exécutée l'étape de procédé suivante :
A) découpe de pièces de tôle dans un panneau de tôle en produisant le treillis résiduel (18) avec une machine-outil (16a, b).

5. Procédé selon la revendication 4 en liaison avec la revendication 3, dans lequel les informations sur le type de matériau sont transmises de la machine-outil (16a, b) à la cisaille à treillis résiduel ; et/ou
les informations sur le type de matériau sont appliquées sur la machine-outil (16a, b) sous la forme d'un code sur le treillis résiduel (18) et sont lues par une caméra de la cisaille à treillis résiduel.

6. Procédé selon l'une des revendications précédentes, dans lequel le traceur (24) comprend des informations sur le numéro de matière, le producteur et/ou le poids du matériau résiduel (12).

7. Procédé selon l'une des revendications précédentes, dans lequel les informations enregistrées sur le traceur (24) sont au moins partiellement chargées sur un serveur basé sur le cloud (40).

8. Procédé selon la revendication 7, dans lequel les informations enregistrées sur le traceur (24) sont au moins partiellement représentées sur une place de marché en ligne (36).

9. Système (10) de recyclage de matériau résiduel (12), dans lequel le système (10) comprend les caractéristiques suivantes :
a) un conteneur (22) et un système de traçabilité (26), dans lequel un traceur (24) du système de traçabilité (26) est disposé ou conçu au niveau du conteneur (22), dans lequel des informations sur le type de matériau du matériau résiduel (12) stocké dans le conteneur (22) peuvent être enregistrées sur le traceur (24) ;
b) un broyeur (20) pour le remplissage du conteneur (22) avec du matériau résiduel (12), en particulier trié par type, dans lequel le broyeur (20) est conçu pour enregistrer les informations sur le type de matériau sur le traceur (24).

10. Système selon la revendication 9, dans lequel le système (10) comprend une machine-outil (16a, b) pour alimenter le broyeur (20).

11. Système selon l'une des revendications 9 à 10, dans lequel la machine-outil (16a, b) est reliée sans fil et/ou par fil au broyeur (20) pour transmettre les informations sur le type de matériau de la machine-outil (16a, b) au broyeur (20) ; et/ou le broyeur (20) comprend une caméra pour scanner un code sur le treillis résiduel (18) et en lire les informations sur le type de matériau.

12. Système selon l'une des revendications 9 à 11, dans lequel le système (10) comprend un serveur basé sur le cloud (40) auquel les informations sur le type de matériau peuvent être transmises par le traceur (24).

13. Système selon la revendication 12, dans lequel le système (10) comprend une place de marché en ligne (36) dans laquelle les informations sur le type de matériau peuvent être représentées.
